# EUROPEAN PATENT APPLICATION

(11) **EP 2 881 657 A2**
(43) Date of publication of application: **10.06.2015**
(21) Application number: 14187906.4
(22) Date of filing: 07.10.2014
(51) Int. Cl.: F21V 8/00

(54) **Illumination device and apparatus provided with illumination device**

(30) Priority: 04.12.2013 JP 2013251055
(71) Applicant: FUJITSU LIMITED, Kawasaki-shi, Kanagawa 211-8588 (JP)
(72) Inventor: Maeda, Satoshi, Kanagawa, 211-8588 (JP)
(74) Representative: Hoffmann Eitle

(57) **Abstract**

An illumination device that illuminates a portion of an outer peripheral surface of an apparatus in a linear manner, the illumination device includes, a light guide plate, two edges of which have a predetermined distance between each other, wherein one of the edges is a light emission surface that is disposed on an outer peripheral surface side of the apparatus and the other one of the edges is a light incident surface that is disposed on an inner side of the apparatus; and at least one light source that is disposed so as to face the light incidence surface, wherein isosceles triangle shaped prisms that have the same base angles are formed in the light incident surface and the light emission surface.

## Description

### FIELD

The embodiments discussed herein are related to an illumination device that decorates a housing with light and an apparatus provided with the illumination device.

### BACKGROUND

Hitherto, in electronic apparatuses, such as computers, mobile phones, and game machines, that are provided with a liquid crystal panel, light is irradiated to a picture displayed on a liquid crystal display from a backlight provided on a back surface side of the liquid crystal display so that the picture may be visualized from the outside. Typically, light from the backlight is irradiated onto a lateral side or an underside of a light guide plate provided on an underside of a liquid crystal display and is, for example, bent, diffused, reflected, and dispersed inside the light guide plate so that luminance unevenness of the light emitted from a front side portion of the light guide plate is restricted. A technique is disclosed in Japanese Laid-open Patent Publication No. 2003-59323 in which emission light that is bright to the corners of a light guide plate and that has no luminance unevenness is obtained by irradiating light to lateral sides of the light guide plate. Furthermore, a technique is disclosed in International Publication Pamphlet No. WO 2009-096293 in which light is irradiated to a backside of a light guide plate to reduce luminance unevenness of emission light emitted from a surface on a front side of the light guide plate.

Meanwhile, other than an application that emits light from the whole surface on a front side or a back side of a light guide plate so as to use the light as a lighting of a liquid crystal display, a lighting device (hereinafter, referred to as an illumination device) is known that emits light from end surfaces of a light guide plate to use the light to decorate a housing.

Such an illumination device may be used in, for example, mobile phones and portable information terminals (hereinafter, both referred to as information terminals) as an interface that notifies incoming information by light. Furthermore, such an illumination device is conceived as a portion of a device design and design is accordingly provided to the illumination device such that various forms of emission are employed.

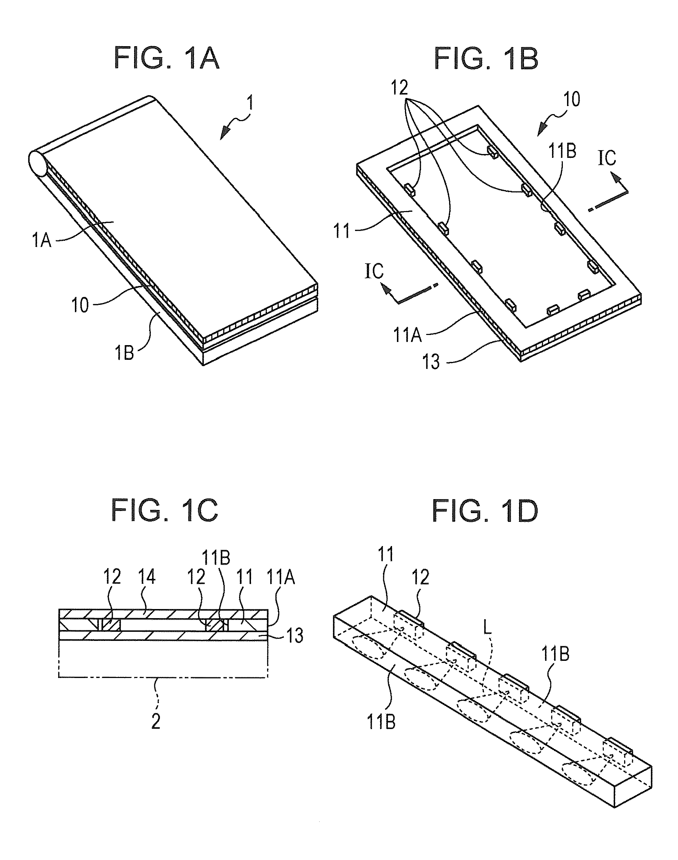

FIGs. 1A to 1D illustrates an example of a mobile phone 1 provided with an illumination device 10 provided with a design. As illustrated in FIG. 1A, the exemplary mobile phone 1 is a foldable type in which a display portion 1A opens and closes with respect to an input portion 1B. The illumination device 10 is embedded in the display portion 1A as a member that emits light around the housing of the display portion 1A in a linear manner.

As illustrated in FIGs. 1B and 1C, the illumination device 10 is provided between a liquid crystal panel 2 and a case 14 and includes a frame-shaped light guide plate 11 and a circuit substrate 13 on which the light emitting diodes (LEDs) 12 are mounted. The LEDs 12 are provided on the circuit substrate 13 such that the light emitting surfaces face the inner peripheral surface 11B of the light guide plate 11. Accordingly, the inner peripheral surface 11B of the light guide plate 11 is an incident surface on which the light from the LEDs 12 is incident. As illustrated in FIG. 1D, the intervals at which the LEDs 12 are disposed are intervals that allows the light from each of the LEDs 12 to be arranged at equal intervals on an outer peripheral surface 11A of the light guide plate 11. The outer peripheral surface 11A of the light guide plate 11 is an emission surface on which the light from the LEDs 12 is incident.

As illustrated in FIG. 1D, the illumination device 10 illustrated in FIGs. 1A to 1D is configured such that light from each LED 12 is incident on the inner peripheral surface 11B of the light guide plate 11 so that the outer peripheral surface 11A on the opposite surface is illuminated.

However, with the present configuration, because the light from each LED 12 penetrates the interior of the light guide plate 11 as it is, portions of the light guide plate 11 where the LEDs 12 are adjacently disposed are bright, disadvantageously turning the other portions into dark portions.

In order to overcome the above problem and to obtain a uniform distribution while the distribution of each light is not uniform, the number of disposed LEDs 12 have to be increased leading to an increase in cost.

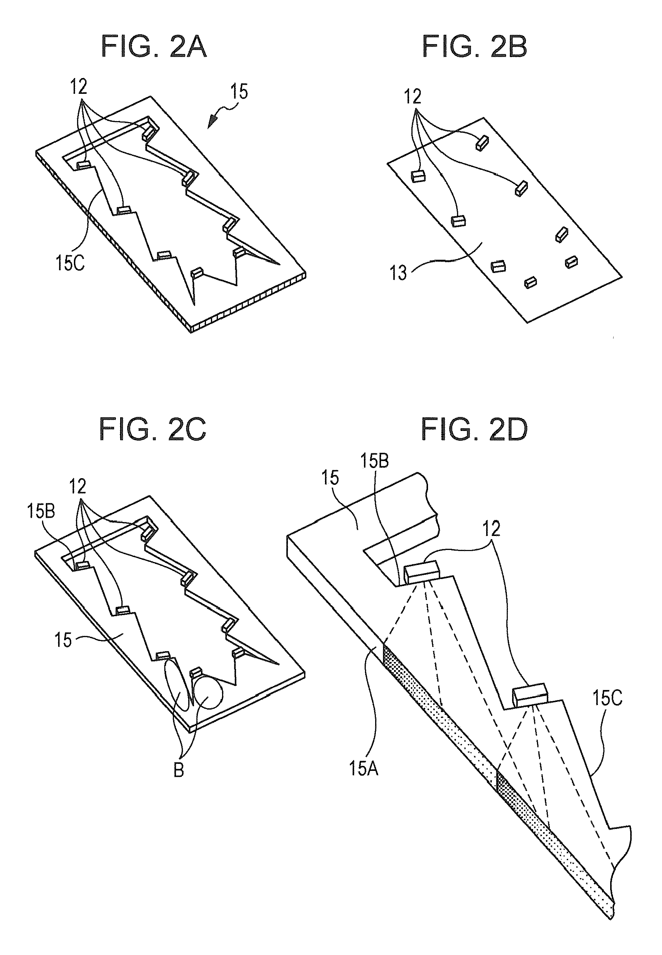

A combination of a light guide plate 15 and the LEDs 12 as illustrated in FIGs. 2A to 2D has been proposed as a method to improve the light distribution of the illumination device 10. In the light guide plate 15 of the above example, incident portions 15B of the light guide plate 15 are formed in oblique shapes 15C in order to widen the spread of the light from each LED 12.

When the incident portions 15B of the light guide plate 15 are formed in oblique shapes 15C in order to widen the spread of the light of each LED 12, as illustrated in FIG. 2B, the orientations of the LEDs 12 on the circuit substrate 13 become inconsistent such that wasted space is created; accordingly, the packaging density of the circuit components on the circuit substrate 13 becomes low.

Furthermore, as illustrated in FIG. 2C, by being matched to the arrangement of the LEDs 12, the shape of each light incident portion (inner peripheral surface) 15B of the light guide plate 15 becomes a large salient; accordingly, no circuit components may be mounted at the position in the light guide plate 15 indicated by the reference sign B, and the packaging density of the circuit components on the circuit substrate 13 becomes low.

### PROBLEMS

Furthermore, when the incident portions 15B of the light guide plate 15 are formed in oblique shapes 15C in order to widen the spread of the light of each LED 12, as illustrated in FIG. 2D, a problem arises in that the distribution of the emission light on a light emission surface (outer peripheral surface) 15A of the light guide plate 15 does not become uniform. This is because, since the light from each LED 12 is irradiated in an oblique manner with respect to the light emission surface (outer peripheral surface) 15A of the light guide plate 15, differences in the lengths of the light paths occur such that portions where the length of the light path is short are bright and portions where the length of the light path is long are dark. Note that in FIG. 2D, the bright portions are dotted in a dense manner and the dark portions are dotted in a sparse manner.

In one aspect, an object of the present application is to provide an illumination device that is capable of making the distribution of the linear emission light from the housing uniform and to provide an apparatus provided with the illumination device.

### SUMMARY

According to an aspect of the invention, an illumination device that illuminates a portion of an outer peripheral surface of an apparatus in a linear manner is disclosed. The illumination device includes, a light guide plate, two edges of which have a predetermined distance between each other, wherein one of the edges is a light emission surface that is disposed on an outer peripheral surface side of the apparatus and the other one of the edges is a light incident surface that is disposed on an inner side of the apparatus; and at least one light source that is disposed so as to face the light incidence surface, wherein isosceles triangle shaped prisms that have the same base angles are formed in the light incident surface and the light emission surface.

### BRIEF DESCRIPTION OF DRAWINGS

FIG. 1A is a perspective view illustrating an example of a mobile phone provided with an illumination device, FIG. 1B is a perspective view illustrating a configuration of the illumination device mounted in the mobile phone illustrated in FIG. 1A, FIG. 1C is a cross-sectional view taken along line IC-IC of FIG. 1B, and FIG. 1D is a partially enlarged view illustrating light paths from LEDs in the light guide plate illustrated in FIG. 1B;
FIG. 2A is a perspective view of another exemplary illumination device different from the illumination device illustrated in FIG. 1B, FIG. 2B is a perspective view of a circuit substrate of the illumination device illustrated in FIG. 2A, FIG. 2C is a perspective view for describing directions of the emission light from the LEDs of the illumination device illustrated in FIG. 2A, and FIG. 2D is a partially enlarged view illustrating light paths from the LEDs in the light guide plate of the illumination device illustrated in FIG. 2A;

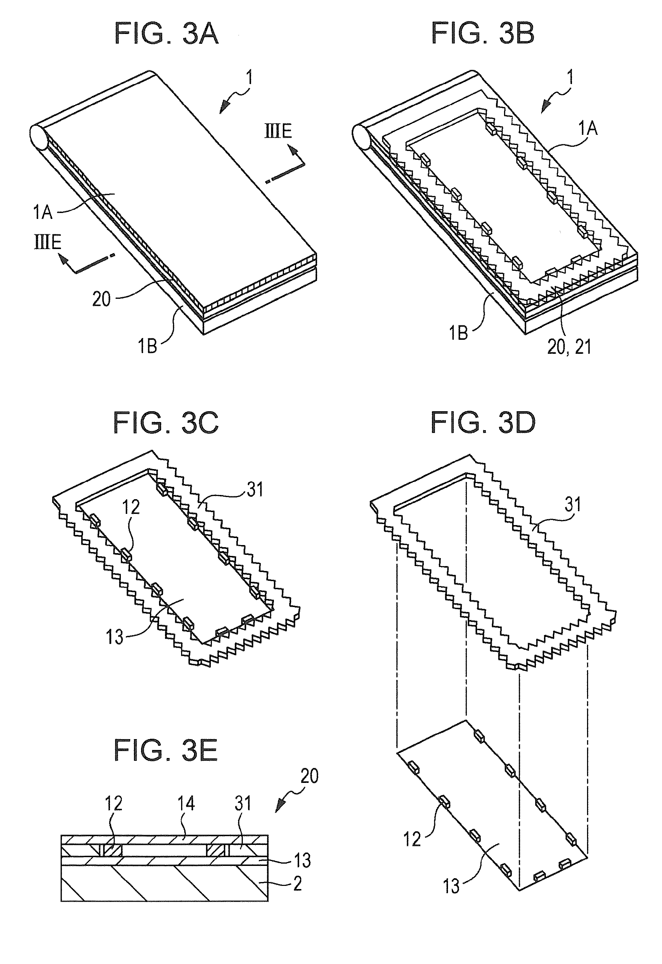

FIG. 3A is a perspective view illustrating an example of a mobile phone in which the illumination device of the present application is mounted, FIG. 3B is a perspective projection illustrating a mounting position of the illumination device of the mobile phone illustrated in FIG. 3A, FIG. 3C is a perspective view illustrating the illumination device illustrated in FIG. 3B taken out from the mobile phone, FIG. 3D is an exploded perspective view of the illumination device illustrated in FIG. 3C, and FIG. 3E is a cross-sectional view taken along line IIIE-IIIE of FIG. 3A;

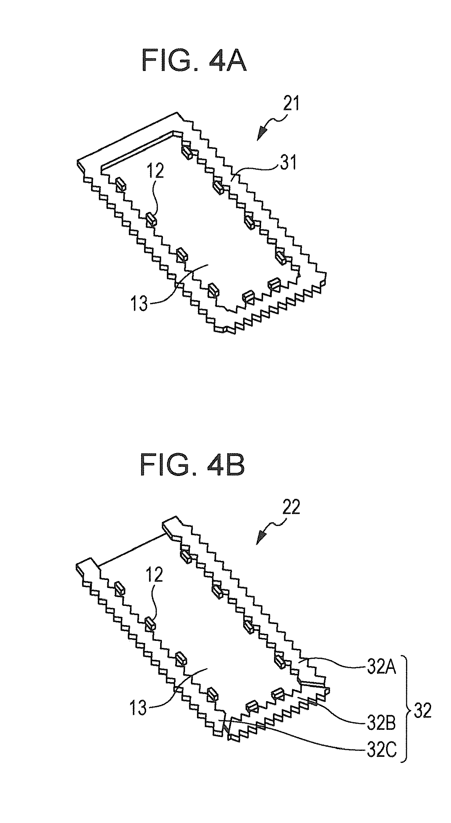

FIG. 4A is a perspective view of a first embodiment of the illumination device of the present application; FIG. 4B is a perspective view of a second embodiment of the illumination device of the present application;

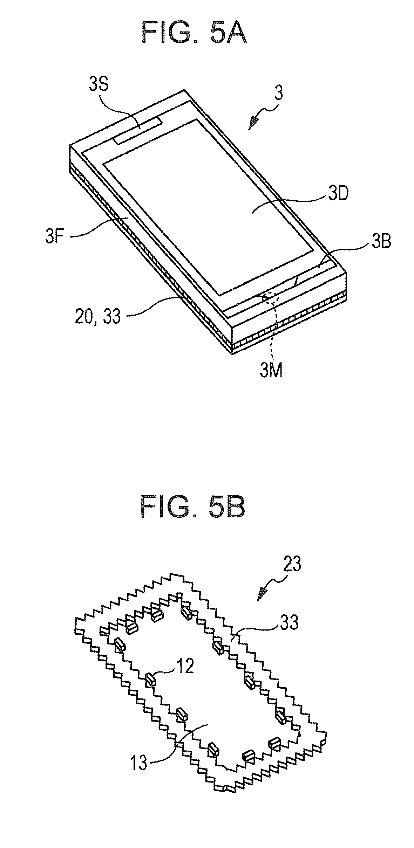

FIG. 5A is a perspective view of another exemplary mobile phone in which an illumination device is mounted, and FIG. 5B is a perspective view of an illumination device of a third embodiment of the present application that is mounted in the mobile phone of FIG. 5A;

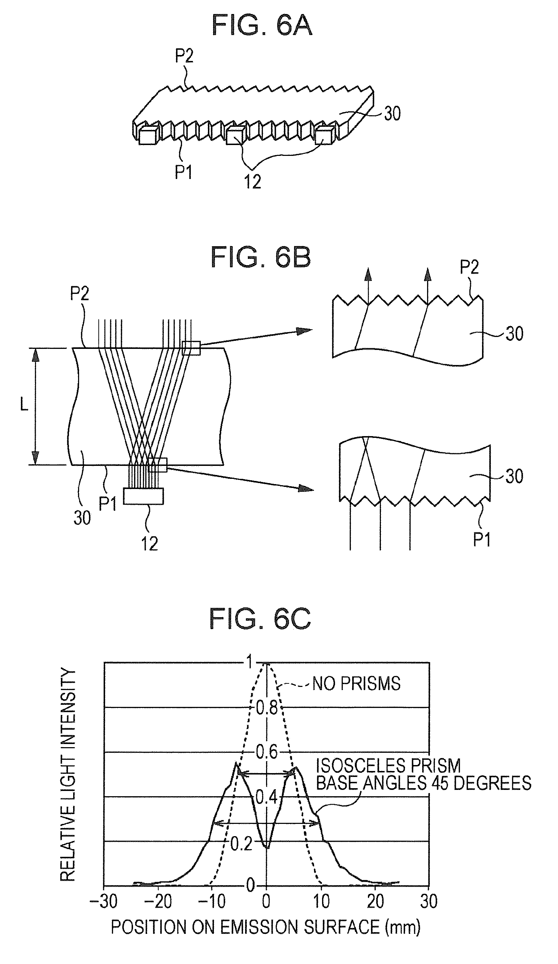

FIG. 6A is a partially enlarged perspective view illustrating the configuration of the light guide plate of the illumination device of the present application and the arrangement of the LEDs, FIG. 6B is a diagram that illustrates, in a partial and enlarged manner, light paths of light from an LED that advances inside the light guide plate and light paths of light at an incident surface and an emission surface when the distance between the incident surface and the emission surface of the light guide plate illustrated in FIG. 6A is L, and FIG. 6C is a characteristic diagram illustrating a comparison of the relative light intensity on the emission surface between a case in which base angles of isosceles triangle shaped prisms provided in the incident surface and the emission surface of the light guide plate illustrated in FIG. 6B are 45 degrees and a case in which there are no prisms;

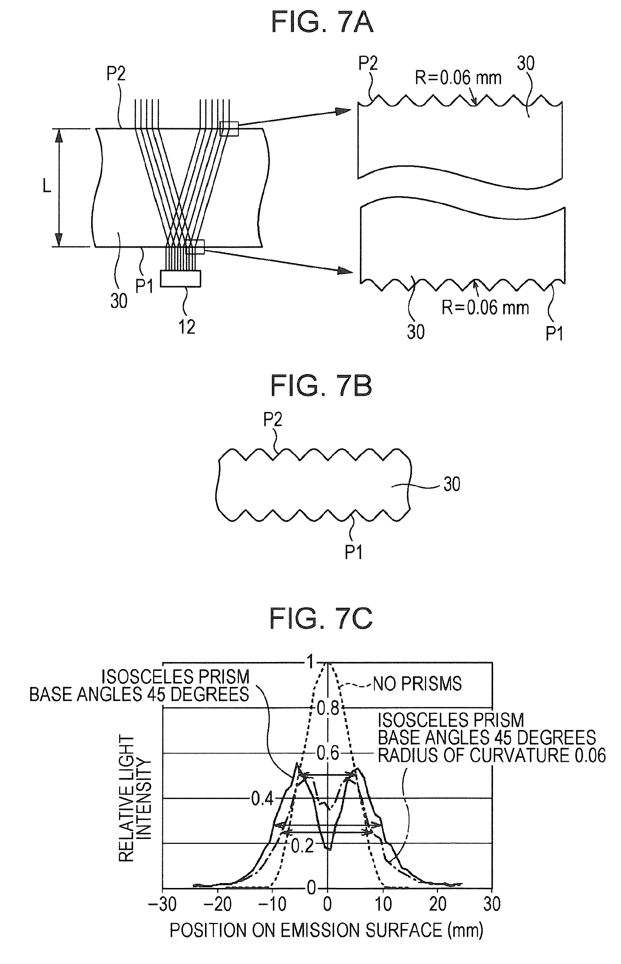

FIG. 7A is a diagram that illustrates, in a partial and enlarged manner, light paths of light from an LED that advances inside the light guide plate and light paths of light at the incident surface and the emission surface when adjacent portions of the isosceles triangle shaped prisms in the incident surface and the emission surface of the light guide plate illustrated in FIG. 6B are curved, FIG. 7B is a partially enlarged view illustrating a light guide plate that is a modification of the light guide plate illustrated in FIG. 7A, and FIG. 7C is a characteristic diagram illustrating a comparison of the relative light intensity on the emission surface between a case in which the isosceles triangle shaped prisms that are provided in the incident surface and the emission surface of the light guide plate illustrated in FIG. 7A have base angles of 45 degrees and are provided with curved portions and the characteristics illustrated in FIG. 6C;

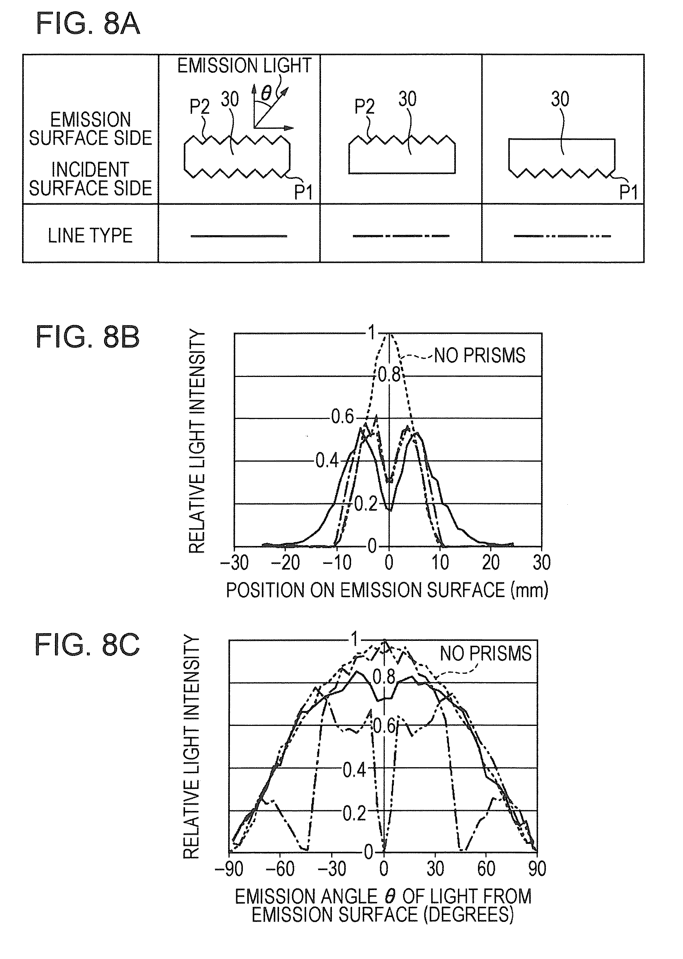

FIG. 8A is a comparative diagram illustrating a light guide plate in which the isosceles triangle shaped prisms on the incident surface side of the light guide plate of the illumination device of the present application are dispensed of such that the incident surface side is a planar surface and a light guide plate in which the isosceles triangle shaped prisms on the emission surface side of the light guide plate of the illumination device of the present application are dispensed of such that the emission surface side is a planar surface, FIG. 8B is a characteristic diagram illustrating the irradiation distribution on each emission surface when the three types of light guide plates illustrated in FIG. 8A are employed, and FIG. 8C is a characteristic diagram illustrating the angle distribution on each emission surface when the three types of light guide plates illustrated in FIG. 8A are used;

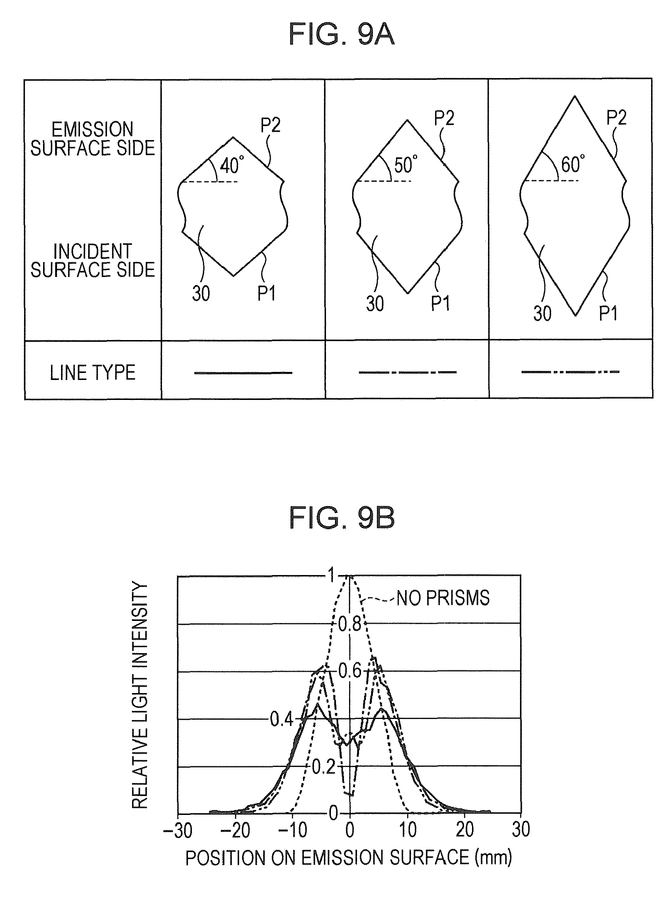

FIG. 9A is a comparative diagram illustrating, in an enlarged manner, portions of the light guide plates of the illumination device of the present application in which the base angles of the isosceles triangle shaped prisms on the incident surface side and the emission surface side are set to 40 degrees, 50 degrees, and 60 degrees, and FIG. 9B is a characteristic diagram illustrating the light intensity on each emission surface when the three types of light guide plates illustrated in FIG. 9A are employed;

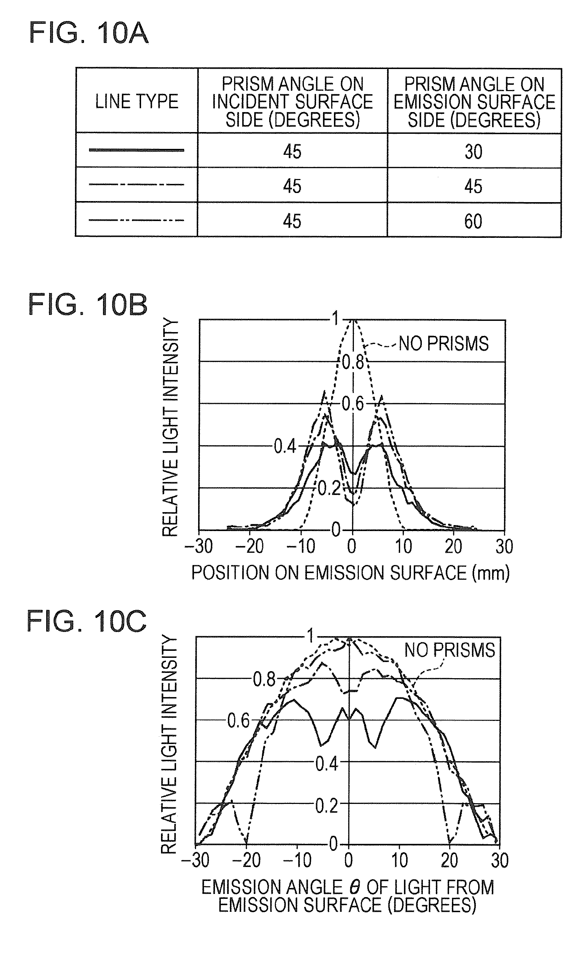

FIG. 10A is a table illustrating a case in which, in the light guide plate of the illumination device of the present application, the base angles of the isosceles triangle shaped prisms on the incident surface side are fixed at 45 degrees and the base angles of the isosceles triangle shaped prisms on the emission surface side are set to 30 degrees, 45 degrees, and 60 degrees, FIG. 10B is a characteristic diagram illustrating the irradiation distribution on each emission surface when the three types of light guide plates illustrated in FIG. 10A are employed, and FIG. 10C is a characteristic diagram illustrating the angle distribution on each emission surface when the three types of light guide plates illustrated in FIG. 10A are used;

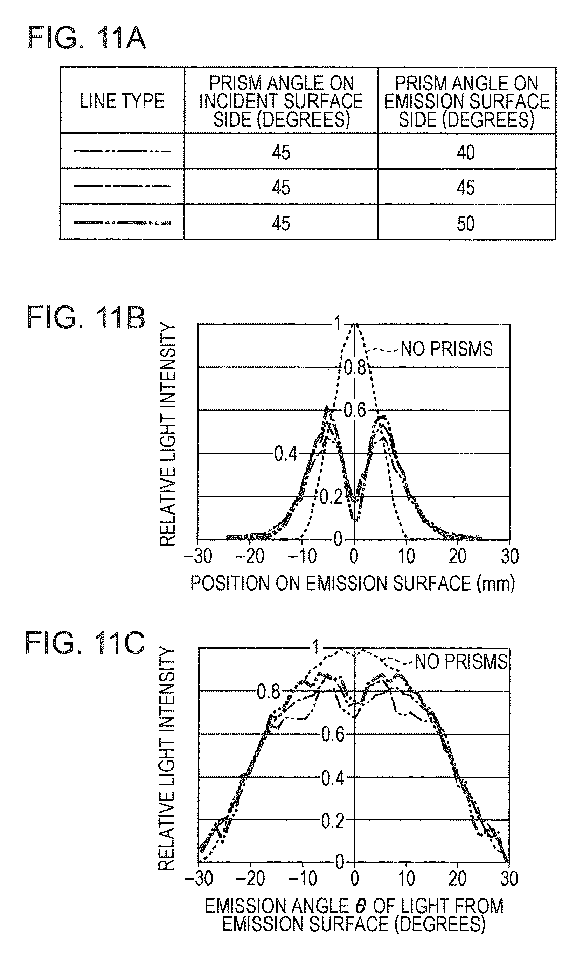

FIG. 11A is a table illustrating a case in which, in the light guide plate of the illumination device of the present application, the base angles of the isosceles triangle shaped prisms on the incident surface side are fixed at 45 degrees and the base angles of the isosceles triangle shaped prisms on the emission surface side are set to 40 degrees, 45 degrees, and 50 degrees, FIG. 11B is a characteristic diagram illustrating the irradiation distribution on each emission surface when the three types of light guide plates illustrated in FIG. 11A are employed, and FIG. 11C is a characteristic diagram illustrating the angle distribution on each emission surface when the three types of light guide plates illustrated in FIG. 11A are used;

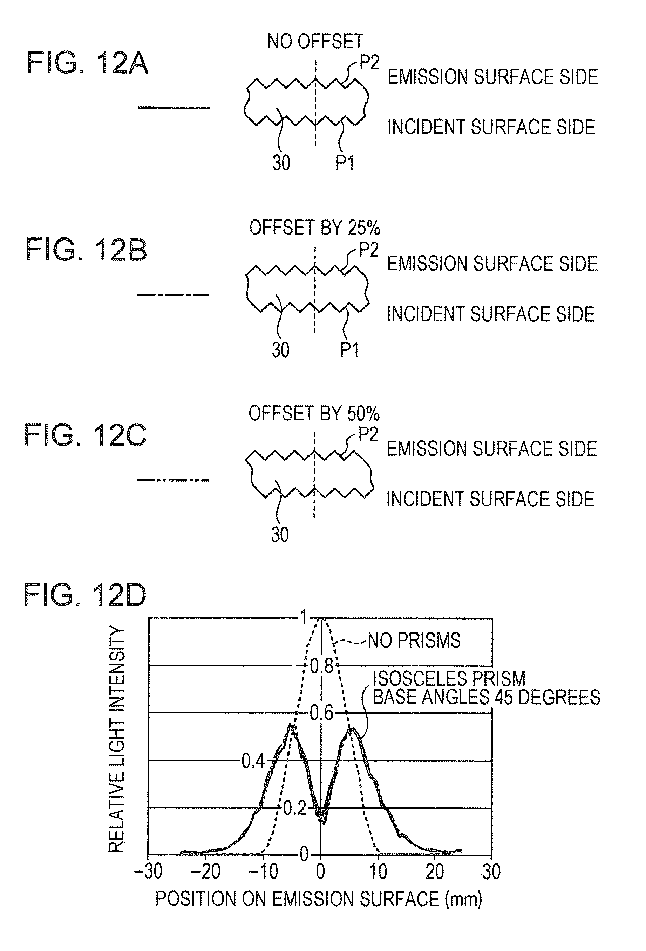

FIG. 12A is a diagram illustrating a light guide plate of the illumination device of the present application in which the base angles of the isosceles triangle shaped prisms on the incident surface side and the emission surface side are fixed to 45 degrees and in which the center lines of the isosceles triangle shaped prisms are the same on the incident surface side and the emission surface side, FIG. 12B is a diagram illustrating a light guide plate in which the center lines of the isosceles triangle shaped prisms on the incident surface side are offset 25% in the lateral direction with respect to the center lines of the isosceles triangle shaped prisms on the emission surface side of the light guide plate of FIG. 12A, FIG. 12C is a diagram illustrating a light guide plate in which the center lines of the isosceles triangle shaped prisms on the incident surface side are offset 50% in the lateral direction with respect to the center lines of the isosceles triangle shaped prisms on the emission surface side of the light guide plate of FIG. 12A, and FIG. 12D is a characteristic diagram illustrating a comparison of the relative light intensity on the emission surface between cases in which the light guide plates illustrated in FIGs. 12A, 12B, and 12C are employed and the case in which the incident surface and the emission surface has no prisms therein;

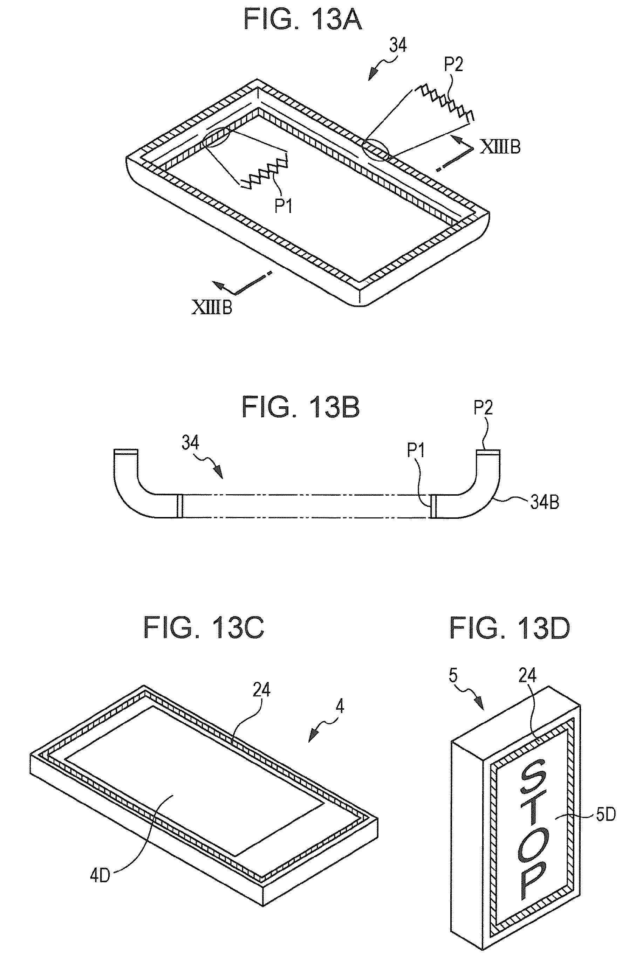

FIG. 13A is a perspective view of a light guide plate employed in the illumination device of a fourth embodiment of the present application, FIG. 13B is a cross-sectional view taken along line XIIIB-XIIIB of FIG. 13A, FIG. 13C is a perspective view of an example of a mobile phone in which an illumination device of the fourth embodiment of the present application is mounted, and FIG. 13D is a perspective view illustrating an example of a sign in which the illumination device of the fourth embodiment is mounted; and

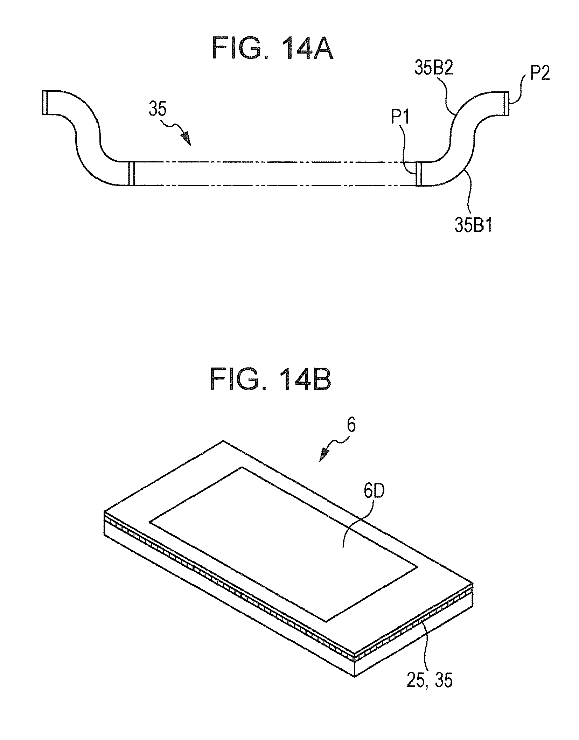

FIG. 14A is a cross-sectional view of a light guide plate employed in an illumination device of a fifth embodiment of the present application and FIG. 14B is a perspective view of an example of a mobile phone in which the illumination device of the fifth embodiment of the present application is mounted.

### DESCRIPTION OF EMBODIMENTS

Referring to the accompanying drawings, hereinafter, exemplary embodiments of the present application will be described in detail based on specific embodiments. Note that except for the term illumination device, the terms mobile phone 1, liquid crystal panel 2, LED 12, circuit substrate 13, and case 14 that have been used for the mobile phone 1 of the comparative technology described in FIGs. 1A to 2D and that will be used for the present application as well will be denoted and described with the same reference numerals.

FIG. 3A illustrates an example of a mobile phone 1 in which an illumination device 20 of the present application is mounted. The mobile phone 1 of the example is a foldable type in which the display portion 1A opens and closes with respect to an input portion 1B. The illumination device 20 is embedded in the display portion 1A as a member that illuminates a portion around a housing of the display portion 1A in a linear manner. Note that in the description hereinafter, reference numerals 20 and 30 are used as representative reference numerals for illustrating the illumination device and the light guide plate, respectively, of the present application and are to include all of the various embodiments of the present application.

FIG. 3B illustrates a mounting position of the illumination device 20 on the mobile phone 1 illustrated in FIG. 3A. In the drawing, an illumination device 21 of a first embodiment is mounted. FIG. 3C illustrates the illumination device 21 of the first embodiment that has been taken out from the mobile phone 1 illustrated in FIG. 3B. Furthermore, FIG. 3D illustrates the illumination device 21 illustrated in FIG. 3C exploded into a light guide plate 31 and the circuit substrate 13.

The light guide plate 31 of the illumination device 21 of the first embodiment has a rectangular frame shape, and isosceles triangle shaped prisms are formed on opposite edges of each of the three sides of the light guide plate 31. In the illumination device 21 of the first embodiment, the inner peripheral surface side of the frame-shaped light guide plate 31 is an incident surface on which the light from each LED 12 is incident. The light incident on the light guide plate 31 passes through the light guide plate 31 and is emitted from the emission surface on the outer peripheral side. The LEDs 12 that irradiate light on the light guide plate 31 is mounted on the edge portions of the circuit substrate 13 at predetermined intervals such that when the circuit substrate 13 is attached to the light guide plate 31, the LEDs 12 face the incident surface of the light guide plate 31.

As described above, by employing the circuit substrate 13 that has the same shape as the hollow shape inside the light guide plate 31, interference between the light guide plate 30 and other mounted components on the circuit substrate 13 may be reduced. Furthermore, as illustrated in FIG. 3D, since the fixing direction of the LEDs 12 may be the same as the mounting direction of other generally mounted components (resistors and integrated circuits), it is possible to suppress wasted space from being created.

As it is applied to the light guide plate 31 of the illumination device 21 of the first embodiment as well, in the illumination device 20 of the present application, isosceles triangle shaped prisms that have the same base angles are formed in the light incident surface and the light emission surface of the light guide plate 30. Note that the reason for having the base angles of the isosceles triangle shaped prisms in the incident surface and the emission surface the same will be described later with light paths inside the light guide plate 31. Furthermore, as illustrated in FIG. 3E, in the mobile phone 1, the illumination device 20 is sandwiched between the case 14 and the liquid crystal panel 2; however, because these members are not directly related to the present application, descriptions thereof are omitted. As shown in FIG.3A and FIG.3E, at the side of the outer peripheral surface of the illumination device 20, the light emission surface of the light guide plate 31 generally continues along the adjoining surfaces of the case 14 and the liquid crystal panel 2.

FIG. 4A illustrates the illumination device 21 of the first embodiment of the present application. While the light guide plate 31 has a rectangular frame shape, the light guide plate 31 does not have to be formed integrally. FIG. 4B illustrates an illumination device 22 of a second embodiment of the present application. In the second embodiment, the circuit substrate 13 on which the LEDs 12 are mounted is the same as the circuit substrate of the illumination device 21 of the first embodiment; however, a light guide plate 32 is not formed integrally but is divided into three linear light guide plates 32A, 32B, and 32C. By forming the light guide plate of the illumination device decorating the apparatus by combining the linear light guide plates together as above, the illumination device of the present application may be mounted on apparatuses regardless of the shape of the apparatuses.

FIG. 5A illustrates an example of another type of mobile phone 3 in which an illumination device 20 of the present application is mounted. The mobile phone 3 of the example is a smart phone and is provided with an operation portion 3B, a display portion 3D, a transmitting portion 3M, and a receiving portion 3S. The illumination device 20 is embedded in the lower portion of the mobile phone 3 so as to illuminate four lateral sides 3F of the housing in a linear manner.

FIG. 5B illustrates an illumination device 23 of a third embodiment of the present application that is mounted in the mobile phone 3 illustrated in FIG. 5A. Similar to the embodiments described up to this point, the illumination device 23 of the third embodiment includes a light guide plate 33 and the circuit substrate 13 on which the LEDs 12 are mounted. The light guide plate 33 of the illumination device 23 of the third embodiment also has a rectangular frame shape, and isosceles triangle shaped prisms provided with the same base angles are formed on opposite surfaces of each side of the light guide plate 33. In the illumination device 23 of the third embodiment, the inner peripheral surface side of the frame-shaped light guide plate 33 is an incident surface on which the light from each LED 12 is incident. The light incident on the light guide plate 33 passes through the light guide plate 33 and is emitted from the emission surface on the outer peripheral side. Accordingly, the light guide plate 33 of the illumination device 23 of the third embodiment includes the light incident surface that continues in a closed loop manner and the light emission surface that is arranged on the outer peripheral surface of the mobile phone 3 so as to continue in a closed loop manner. Similar to the embodiments described up to this point, the LEDs 12 that irradiate light on the light guide plate 33 is mounted on the edge portions of the circuit substrate 13 at predetermined intervals such that when the circuit substrate 13 is attached to the light guide plate 33, the LEDs 12 face the incident surface of the light guide plate 33.

Now, the grounds for forming, in the light guide plates 31 to 33 of the illumination devices 21 to 23 of the first to third embodiment described above, the isosceles triangle shaped prisms having the same base angles on the light incident surface and the light emission surface of each of the light guide plates 31 to 33 will be given with reference to FIGs. 6A to 12D. Note that in this description, description will be given while the light guide plate is attached with the representative reference numeral 30, the isosceles triangle shaped prisms formed on the incident surface are attached with a reference numeral P1, and the isosceles triangle shaped prisms formed on the emission surface are attached with a reference numeral P2.

FIG. 6A illustrates a structure of the light guide plate 30 employed in the illumination device of the present application and the arrangement of the LEDs 12. Isosceles triangle shaped prisms P1 and P2 that are provided with the same base angles are formed in the light incident surface and the light emission surface, respectively, of the light guide plate 30. Furthermore, the LEDs 12 are provided at predetermined intervals at positions facing the isosceles triangle shaped prisms Pl on the incident surface side. Note that the dimensions of the LEDs 12 and the scale of the prisms P1 and P2 in FIG. 6A are not the same. The isosceles triangle shaped prisms P1 on the incident surface side and the isosceles triangle shaped prisms P2 on the emission surface side are congruent or analogous to one another and the prisms P1 and P2 are continuously provided in parallel to the arrangement direction of the LEDs 12. Furthermore, a plurality of prisms P1 are disposed in front of a single LED 12.

FIG. 6B illustrates an example in which a distance L between the incident surface and the emission surface of the light guide plate 30 illustrated in FIG. 6A is 10 mm and isosceles triangle shaped prisms P1 and P2 that have the same dimension (congruent) and base angles of 45 degrees are formed on the incident surface and the emission surface. As understood from the example, a plurality of isosceles triangle shaped prisms P1 are disposed in front of the LEDs 12. With the isosceles triangle shaped prisms P1 on the incident surface side, light from each LED 12 is split and is diverged more than its original light distribution (angle distribution) such that the light is propagated inside the light guide plate 30 towards the emission surface at a wider angle. Note that the emission light from an LED 12 is generally a divergent light; however, in order to facilitate the view, from FIG. 6B and after, when a ray is to be illustrated, the representative light that is emitted in a perpendicular manner from the LED 12 will be illustrated.

The light that has been diverged in the light guide plate 30 is returned to its original angle by the isosceles triangle shape prisms P2 on the emission surface side and is emitted from the light guide plate 30. As described above, since the light from the LED 12 incident on the light guide plate 30 not only spreads out but may be emitted while maintaining the emission angle characteristics of the light, it is possible to obtain an effect similar to the effect obtained when the LEDs 12 are arranged in a dense manner on the incident surface. Accordingly, the distribution of the emission light may be uniformized without increasing the number of light sources (LEDs 12) and the number of reflectors. Furthermore, the light path may be shortened and the apparatus on which the illumination device of the present application is mounted may be downsized.

FIG. 6C is a characteristic diagram illustrating a comparison of the relative light intensity on the emission surface between a case in which isosceles triangle shaped prisms P1 and P2 are provided in the incident surface and the emission surface, respectively, of the light guide plate 30 illustrated in FIG. 6B and a case in which there are no prisms on the incident surface and the emission surface. The width of each LED 12 is 4 mm, the distance L between the incident surface and the emission surface of the light guide plate 30 is 10 mm, the base angles of both the isosceles triangle shaped prisms P1 and P2 are 45 degrees, and the pitch is 0.2 mm. It may be understood from FIG. 6C that in the non-prism configuration that employs no isosceles triangle shaped prisms, a half-value irradiation area that is an area on the emission surface in which the light intensity becomes half is ±5.2 mm and, conversely, in the case in which the prisms having base angles of 45 degrees are employed, the half-value irradiation area is ±9.8 mm and light is spread 1.9 times more than that of the non-prism configuration. In other words, with the configuration of the light guide plate 30 illustrated in FIG. 6B, it is possible to obtain a distribution that is about the same as when the number of LEDs are doubled.

FIG. 7A illustrates a modification in which adjacent portions of the isosceles triangle shaped prisms P1 and P2 in the incident surface and the emission surface, respectively, of the light guide plate 30 illustrated in FIG. 6B are curved. FIG. 7A illustrates, in an enlarged manner, a portion of the light paths of the light from an LED 12 that advances inside the light guide plate 30 and a portion of the light paths of the light at the incident surface and the emission surface. The distance between the incident surface and the emission surface, the base angles of the isosceles triangle shaped prisms P1 and P2, and the pitch are the same as those of the embodiment illustrated in FIG. 6B. Furthermore, the radius of curvature R of the grooves at the bottom portions of the curved prisms P1 and P2 (the adjacent portions of the prisms P1 and P2 on the light guide plate 30 side) are 0.06 mm. Note that the adjacent portions of the curved prisms P1 and P2 do not have to be the bottom portions of the prisms P1 and P2 and may be, as illustrated in FIG. 7B, the tips of the prisms P1 and P2.

FIG. 7C is a characteristic diagram illustrating a comparison of the relative light intensity on the emission surface between a case in which the isosceles triangle shaped prisms that are provided in the incident surface and the emission surface of the light guide plate illustrated in FIG. 7A have base angles of 45 degrees and are provided with curved portions and the characteristics illustrated in FIG. 6C. As understood from FIG. 7C, by curving each of the grooves at the bottom portions of the prisms P1 and P2 to a radius of curvature R of 0.06 mm, compared with the case that has no curved portions, the dark portion in the middle is brighter. The irradiation area on the emission surface of the present modification is ±8.1 mm and the light may be spread 1.6 times more than that of the non-prism configuration. In other words, with the configuration of the present modification, it is possible to obtain an effect similar to the light distribution when the number of LEDs is increased by about two times.

FIG. 8A is a comparative diagram illustrating a light guide plate 30 in which the isosceles triangle shaped prisms P1 on the incident surface side of the light guide plate 30 of the illumination device of the present application are dispensed of such that the incident surface side is a planar surface and a light guide plate 30 in which the isosceles triangle shaped prisms P2 on the emission surface side of the light guide plate 30 of the illumination device of the present application are dispensed of such that the emission surface side is a planar surface. Furthermore, FIG. 8B is a characteristic diagram illustrating the irradiation distribution on each emission surface when the three types of light guide plates 30 illustrated in FIG. 8A are employed, and FIG. 8C is a characteristic diagram illustrating the angle distribution on each emission surface when the three types of light guide plates 30 illustrated in FIG. 8A are employed. The distance between the incident surface and the emission surface of each light guide plate 30, the base angles of the isosceles triangle shaped prisms P1 and P2, and the pitch are the same as those of the light guide plate 30 illustrated in FIG. 6B.

As understood from the irradiation distribution on the emission surface illustrated in FIG. 8B, the light is spread the most with the configuration in which the prisms having base angles of 45 degrees are provided on both the incident surface and the emission surface; however, the light does not spread to an overwhelming extent when compared with the configuration in which the prisms having base angles of 45 degrees are provided only on either one of the sides. On the other hand, as understood from the angle distribution of each emission light illustrated in FIG. 8C, the configuration in which the incident surface and the emission surface are both provided with prisms having base angles of 45 degrees obtains an angle distribution that is most approximate to the angle distribution of the emission light of the LED in the configuration provided with no prisms and emits light in the range of ±90 degrees. However, with the configuration in which prisms having base angles of 45 degrees are provided only on either one of the incident surface and the emission surface, the light is not emitted in the 0 degrees direction (a direction of the line normal to the emission surface) and the angular range of the emission is narrow. Therefore, it may be said that the configuration in which prisms P1 and P2 are formed on both the incident surface side and the emission surface side is the best.

FIG. 9A is a comparative diagram illustrating, in an enlarged manner, portions of the light guide plates 30 of the illumination device of the present application in which the base angles of the isosceles triangle shaped prisms P1 and P2 on the incident surface side and the emission surface side, respectively, are set to 40 degrees, 50 degrees, and 60 degrees. Furthermore, FIG. 9B is a characteristic diagram illustrating the relative light intensity on each emission surface when the three types of light guide plates 30 illustrated in FIG. 9A are employed. The distance between the incident surface and the emission surface of each light guide plates 30, the pitches of the isosceles triangle shaped prisms P1 and P2 are the same as those of the light guide plate 30 illustrated in FIG. 6B while the base angles are 40 degrees, 50 degrees, and 60 degrees.

As illustrated in FIG. 9B, even when the base angles of the isosceles triangle shaped prisms P1 and P2 of the light guide plates 30 are set to 40 degrees, 50 degrees, and 60 degrees, it is possible to confirm spread of light in the light distribution on each emission surface. Accordingly, the base angles of the isosceles triangle shaped prisms P1 and P2 of the light guide plate 30 is not limited to 45 degrees.

FIG. 10A illustrates a case in which, in the light guide plate of the illumination device of the present application, the base angles of the isosceles triangle shaped prisms on the incident surface side are fixed at 45 degrees and the base angles of the isosceles triangle shaped prisms on the emission surface side are set to 30 degrees, 45 degrees, and 60 degrees. The distance between the incident surface and the emission surface of each light guide plate, the pitches of the isosceles triangle shaped prisms are the same as those of the light guide plate 30 illustrated in FIG. 6B while the base angles of the isosceles triangle shaped prisms on the emission surface side are 40 degrees, 50 degrees, and 60 degrees.

FIG. 10B is a characteristic diagram illustrating the irradiation distribution on each emission surface when the three types of light guide plates illustrated in FIG. 10A are employed, and FIG. 10C is a characteristic diagram illustrating the angle distribution on each emission surface when the three types of light guide plates illustrated in FIG. 10A are employed. As illustrated in FIG. 10B, in the irradiation distribution on the emission surface, the light is spread the most when the base angles of the prisms in the emission surface are large, namely, 60 degrees. On the other hand, in the angle distribution of the emission light illustrated in FIG. 10C, spread of light is suppressed when the base angles of the prisms in the emission surface are large, namely, 60 degrees, and emission of light stops once at ±60 degrees with respect to the line normal to the emission surface. Furthermore, when the base angles of the prism in the emission surface is small, namely, 30 degrees, compared with the case in which the base angles of the prisms in the emission surface is 45 degrees, the light intensity at ±60 degrees with respect to the line normal to the emission surface decreases dropping the brightness. Accordingly, it is best when the isosceles triangle shaped prisms P1 and P2 of the light guide plate 30 are analogous to one another.

FIG. 11A is a table for investigating margins of the base angles in the light guide plate of the illumination device of the present application in which the base angles of the isosceles triangle shaped prisms on the incident surface side are fixed at 45 degrees and the base angles of the isosceles triangle shaped prisms on the emission surface side is set to 40 degrees, 45 degrees, and 50 degrees. The distance between the incident surface and the emission surface of the light guide plate, the pitch of the isosceles triangle shaped prisms on the incident surface side and the emission surface side are the same as those of the light guide plate 30 illustrated in FIG. 6B.

FIG. 11B is a characteristic diagram illustrating the irradiation distribution on each emission surface when the three types of light guide plates illustrated in FIG. 11A are employed, and FIG. 11C is a characteristic diagram illustrating the angle distribution on each emission surface when the three types of light guide plates illustrated in FIG. 11A are employed. In both characteristics, namely, the irradiation distribution on each emission surface as illustrated in FIG. 11B and the angle distribution of each emission light illustrated in FIG. 11C, when the base angles of the prisms in the emission surface are 45 ± 5 degrees, the light intensities all fall within about ±10%. It may be said that a similar performance may be obtained if the difference of the base angles of the isosceles triangle shaped prisms P1 and P2 of the light guide plate 30 are within ± 5 degrees.

FIG. 12A illustrates a light guide plate 30 of the illumination device of the present application in which the base angles of the isosceles triangle shaped prisms on the incident surface side and the emission surface side are fixed to 45 degrees and in which the center lines of the isosceles triangle shaped prisms P1 and P2 are the same on the incident surface side and the emission surface side. Furthermore, FIG. 12B illustrates a light guide plate 30 in which the center lines of the isosceles triangle shaped prisms P1 on the incident surface side are offset 25% in the lateral direction with respect to the center lines of the isosceles triangle shaped prisms P2 on the emission surface side of the light guide plate 30 of FIG. 12A. Moreover, FIG. 12C illustrates a light guide plate 30 in which the center lines of the isosceles triangle shaped prisms P1 on the incident surface side are offset 50% in the lateral direction with respect to the center lines of the isosceles triangle shaped prisms P2 on the emission surface side of the light guide plate 30 of FIG. 12A.

FIG. 12D is a characteristic diagram illustrating a comparison of the relative light intensity on the emission surface between cases in which the light guide plates 30 illustrated in FIGs. 12A, 12B, and 12C are employed and the case in which the incident surface and the emission surface has no prisms therein. The distance between the incident surface and the emission surface of the light guide plate 30, the pitches of the isosceles triangle shaped prisms P1 and P2 on the incident surface side and the emission surface side, respectively, are the same as those of the light guide plate 30 illustrated in FIG. 6B. Only the positions of the prisms P1 are offset with respect to the position of the prisms P2. In the above case, as illustrated in FIG. 12D, even when the position of the prisms P1 are offset with respect to the position of the prisms P2, the light spread distribution scarcely changes. Accordingly, no problem arises even if, for certain reasons during manufacture for example, the position of the prisms P1 with respect to the position of the prism P2 is deviated (offset/slid).

As described above, in the illumination device of the present application, the pitches of the prisms in the incident surface and the emission surface may be different as long as the base angles are the same. Furthermore, if the precision of the base angles and the parallel precision of the prisms in the incident surface and the emission surface are within manufacture errors, the errors may be tolerated and sufficient performance may be obtained. Moreover, in the embodiments described above, the prisms are aligned in a linear manner with respect to each other; however, even if the prisms are aligned in a manner other than a linear manner such as in an arc with a large radius, as long as the prisms of the isosceles triangle shaped prisms of the incident surface and the emission surface are analog to one another, a similar effect may be obtained.

FIG. 13A illustrates a light guide plate 34 employed in the illumination device of a fourth embodiment of the present application and FIG. 13B is a cross-sectional view taken along line XIIIB-XIIIB of FIG. 13A. Similar to the light guide plate 33 of the third embodiment illustrated in FIG. 5B, the light guide plate 34 employed in the illumination device of the fourth embodiment is provided with prisms P1 and P2 throughout the whole inner peripheral surface and outer peripheral surface, respectively, of the light guide plate 34. On the other hand, in the light guide plate 34 of the fourth embodiment, there is a bend 34B between the light incident surface and the light emission surface such that the light incident surface provided with the prisms P1 is orthogonal to the light emission surface provided with the prisms P2. Depending on the set bending angle of the bend 34B, the angle of the light incident surface provided with the prisms P1 may be changed to any angle with respect to the light emission surface provided with the prisms P2.

FIG. 13C illustrates an example of a mobile phone 4 in which an illumination device 24 of the fourth embodiment of the present application is mounted. The mobile phone 4 of the present embodiment is a smart phone provided with a display portion 4D on the surface on the front of the mobile phone 4. The illumination device 24 of the fourth embodiment may be disposed around the display portion 4D of the mobile phone 4. Furthermore, FIG. 13D illustrates an example of a sign 5 in which the illumination device 24 of the fourth embodiment is mounted. The sign 5 includes a display portion 5D, and the illumination device 24 of the fourth embodiment may be disposed around the display portion 5D of the sign 5. The sign 5 may improve the visibility of a sign displayed on the display portion 5D by flashing the illumination device 24.

FIG. 14A is a cross-sectional view of a light guide plate 35 employed in an illumination device of a fifth embodiment of the present application. Although illustration of the overall light guide plate 35 is omitted, similar to the light guide plate 33 of the third embodiment illustrated in FIG. 5B, the light guide plate 35 employed in the illumination device of the fifth embodiment is provided with prisms P1 and P2 throughout the whole inner peripheral surface and outer peripheral surface, respectively, of the light guide plate 35. On the other hand, in the light guide plate 35 of the fifth embodiment, a rigid curve 35B1 and a valley curve 35B2 are provided between the light incident surface and the light emission surface such that the light emission surface is parallel with and at a height different from the light incident surface. Depending on the set length of the light guide plate 35 between the rigid curve 35B1 and the valley curve 35B2, the height of the light emission surface in which the prisms P2 are provided may be changed to any height with respect to the light incident surface in which the prisms P1 are provided.

FIG. 14B illustrates an example of a mobile phone 6 in which an illumination device 25 of the fifth embodiment of the present application is mounted. The mobile phone 6 of the present embodiment is a smart phone provided with a display portion 6D on the surface on the front of the mobile phone 6. The emission surface of the light guide plate 35 of the illumination device 25 of the fifth embodiment may be disposed in the lateral sides of the mobile phone 6 so as to surround a portion that is close to the display portion 6D. In the mobile phone 6 in which the illumination device 25 of the fifth embodiment is mounted, since the position of the emission surface of the light guide plate 35 in the lateral side may be changed, the embodiment may correspond to mobile phones 6 with different designs.

## Claims

1. An illumination device that illuminates a portion of an outer peripheral surface of an apparatus in a linear manner, the illumination device comprising:
a light guide plate, two edges of which have a predetermined distance between each other, wherein one of the edges is a light emission surface that is disposed on an outer peripheral surface side of the apparatus and the other one of the edges is a light incident surface that is disposed on an inner side of the apparatus; and
at least one light source that is disposed so as to face the light incidence surface, wherein
isosceles triangle shaped prisms that have the same base angles are formed in the light incident surface and the light emission surface.

2. The illumination device according to claim 1, wherein
the isosceles triangle shaped prisms that are formed in the light incident surface and the light emission surface are congruent or analogous to one another.

3. The illumination device according to claim 1 or 2, wherein
the light guide plate includes
the light emission surface that is disposed so as to continue along the adjoining surfaces of the outer peripheral surface of the apparatus, and
the light incident surface that is provided at a position facing the light emission surface.

4. The illumination device according to claim 1 or 2, wherein
the light guide plate includes
the light incident surface that continues in a closed loop manner, and
the light emission surface that is disposed in the outer peripheral surface of the apparatus and that continues in a closed loop manner.

5. An apparatus, comprising:
an illumination device that is capable of illuminating a portion of an outer peripheral surface of the apparatus in a linear manner, wherein
the illumination device includes
a light guide plate, two edges of which have a predetermined distance between each other, wherein one of the edges is a light emission surface that is disposed on an outer peripheral surface side of the apparatus and the other one of the edges is a light incident surface that is disposed on an inner side of the apparatus, and
at least one light source that is disposed so as to face the light incidence surface, and
isosceles triangle shaped prisms that have the same base angles are formed in the light incident surface and the light emission surface.
